# FASCICULE DE BREVET EUROPEEN

(11) **EP 3 019 712 B1**
(45) Date de publication et mention de la délivrance du brevet: **05.09.2018**
(21) Numéro de dépôt: 14756090.8
(22) Date de dépôt: 10.07.2014
(51) Int. Cl.: F01D 25/12, F02C 7/06, F02C 7/14

(54) **DISPOSITIF DE REFROIDISSEMENT D'HUILE POUR UNE TURBOMACHINE**
VORRICHTUNG ZUR KÜHLUNG VON ÖL FÜR EINEN TURBINENMOTOR
DEVICE FOR COOLING OIL FOR A TURBINE ENGINE

(30) Priorité: 12.07.2013 FR 1356913
(43) Date de publication de la demande: 18.05.2016
(73) Titulaire: Safran Aircraft Engines, 75015 Paris (FR)
(72) Inventeur: MULLER, Jean-Louis, F-77550 Moissy Cramayel Cedex (FR); MOUTON, Pierre, Charles, F-77550 Moissy Cramayel Cedex (FR)
(74) Mandataire: Robert, Mathias
(86) Numéro de dépôt international: PCT/FR2014/051775
(87) Numéro de publication internationale: WO 2015/004394

(56) Documents cités:
- EP-A2- 1 496 302
- GB-A- 2 093 373
- US-A1- 2005 211 093

## Description

La présente invention concerne un dispositif de refroidissement d'huile pour une turbomachine, une turbomachine équipée d'un tel dispositif et un procédé de refroidissement d'huile dans une turbomachine.

Dans une turbomachine, différents organes et équipements (enceintes contenant des roulements, boîtes d'engrenages, machines électriques, etc...) doivent être lubrifiés ou refroidis à l'aide d'un circuit d'huile, la chaleur générée étant généralement évacuée au travers du circuit d'huile, par l'intermédiaire d'échangeurs de chaleur de type carburant-huile et/ou du type air-huile.

Les turbomachines actuelles génèrent de plus en plus de chaleur, notamment du fait de la complexité accrue des mécanismes de transmission (réducteurs) et des taux de dilution très élevés. Il en résulte que les échangeurs carburant-huile (FCOC pour Fuel Cooled Oil Cooler) sont saturés. En effet, le débit de carburant est limité à la consommation de la turbomachine. De plus, réchauffement du carburant doit être limité afin d'éviter qu'il ne se transforme en gomme et bouche le circuit de carburant, cet échauffement pouvant provoquer dans le pire des cas un départ de feu dans la turbomachine.

Les turbomachines actuelles nécessitent ainsi l'utilisation d'échangeurs air-huile (ACOC pour Air Cooled Oil Cooler).

Les échangeurs de type ACOC fonctionnent grâce à un flux d'air forcé ou non, qui est guidé le long d'une surface d'échange avec un circuit d'huile. L'alimentation en air peut être réalisée par exemple par écope ou par piquage du flux d'air.

Un échangeur ACOC peut être de type surfacique. Dans ce cas, il se présente généralement sous la forme d'une pièce surfacique métallique permettant le passage d'huile dans des canaux usinés en son centre. L'extraction de calories est réalisée à l'aide d'ailettes en contact avec un flux d'air froid. Pour assurer des échanges thermiques importants, un tel échangeur doit présenter une surface importante, et donc également une masse et un encombrement importants.

Il existe également des échangeurs ACOC de type « brique », qui sont des échangeurs relativement lourds, qui perturbent l'écoulement du flux d'air et ont un effet néfaste sur le rendement de la turbomachine.

L'invention a notamment pour but d'apporter une solution simple, efficace et économique à ces problèmes. Un dispositif de refroidissement d'huile selon l'art antérieur est connu du document GB2093373. A cet effet, elle propose un dispositif de refroidissement d'huile pour une turbomachine, telle qu'un turboréacteur ou un turbopropulseur d'avion, caractérisé en ce qu'il comporte une canalisation de circulation d'un flux d'air froid, des moyens d'injection d'huile à l'intérieur de la canalisation, et des moyens d'extraction de l'huile mélangée au flux d'air froid, situés dans la canalisation, en aval des moyens d'injection.

L'invention propose donc de mélanger l'huile chaude et l'air froid afin d'obtenir, par conduction, un mélange air-huile homogène à l'intérieur de la canalisation, dont la température sera la température d'équilibre du mélange. Ce mélange est ensuite traité par les moyens d'extraction d'huile de façon à séparer l'huile de l'air. L'huile peut ainsi retourner dans le circuit d'huile de la turbomachine et l'air peut être déchargé à l'atmosphère, dans une enceinte ventilée ou encore dans une zone de la turbomachine à plus basse pression (veine secondaire par exemple).

De préférence, les moyens d'injection d'huile comportent une buse d'injection apte à pulvériser l'huile de manière à former des gouttelettes d'huile de dimensions comprises entre 1 et 5 µm.

Les gouttelettes d'huile ont alors une grande surface d'échange avec le flux d'air froid, ce qui permet de maximiser les échanges de chaleur entre eux.

Selon une caractéristique de l'invention, le dispositif comporte une conduite d'arrivée d'huile reliée aux moyens d'injection d'huile et une conduite d'extraction d'huile reliée aux moyens d'extraction d'huile, lesdites conduites d'arrivée et d'extraction d'huile étant reliées par une conduite de dérivation comportant un clapet ou une vanne apte à s'ouvrir en cas de surpression au niveau de la conduite d'arrivée d'huile.

De cette manière, le clapet ou la vanne est apte à s'ouvrir en cas de colmatage des moyens d'injection ou encore lorsque l'huile est froide et présente une viscosité importante. Dans ces cas de fonctionnement particuliers, l'huile n'est pas refroidie par le flux d'air froid et est amenée directement de la conduite d'entrée à la conduite de sortie.

Avantageusement, les moyens d'extraction d'huile comportent un déshuileur rotatif.

La structure et le fonctionnement d'un tel déshuileur est connu notamment du document FR 2 937 680, au nom de la Demanderesse.

On notera qu'en fonctionnement, un déshuileur rotatif ne permet pas toujours d'extraire la totalité de l'huile présente dans le mélange air-huile. Un tel déshuileur voit en effet son efficacité augmenter lorsque son régime de rotation augmente et son efficacité diminuer lorsque le débit volumique d'air augmente, car les gouttelettes d'huiles présentes dans le mélange air-huile sont alors plus petites et plus nombreuses. Ces fines gouttelettes peuvent avoir tendance à suivre les filets d'air malgré les forces exercées sur elles par la centrifugation et les forces d'inertie exercées lors du fonctionnement du déshuileur rotatif.

L'efficacité du déshuileur peut notamment être améliorée par :
- une augmentation de la pression d'air dans la canalisation à débit masse égal (réduction de la vitesse de l'air et des gouttelettes ce qui améliore la séparation effectuée par effet centrifuge).
- un refroidissement de l'air en amont des moyens d'injection d'huile (augmentation de la différence de température entre l'huile chaude et l'air froid),
- une vitesse de rotation élevée du déshuileur rotatif.

De préférence, la canalisation est équipée d'une turbine en amont des moyens d'injection d'huile, la turbine comportant un arbre, destiné à être entraîné en rotation par passage du flux d'air au travers de la turbine, et couplé en rotation au déshuileur rotatif.

Une telle caractéristique permet d'entraîner le déshuileur rotatif a un régime élevé, ce qui a pour effet d'augmenter son efficacité, comme indiqué précédemment.

En outre, les moyens d'extraction d'huile comportent un corps en mousse métallique. Un tel corps qui peut être utilisé ou non en combinaison avec un déshuileur rotatif, est par exemple connu sous la marque Retimet et décrit dans le document US 2012/024723 en combinaison avec un déshuileur rotatif.

Ce corps permet de créer un circuit tortueux facilitant le contact des gouttelettes d'huile avec les parois du bloc, ce qui permet de mieux piéger ces gouttelettes et d'augmenter ainsi l'efficacité des moyens d'extraction. L'utilisation d'un tel bloc génère toutefois une perte de charge élevée, qu'il convient de prendre en compte.

L'invention concerne également une turbomachine telle qu'un turboréacteur ou un turbopropulseur d'avion, comportant, d'amont en aval dans le sens d'écoulement des gaz, une soufflante, un compresseur basse pression, un compresseur haute pression, une chambre de combustion, une turbine haute pression, une turbine basse pression, et une tuyère d'échappement des gaz, caractérisée en ce qu'elle comporte un dispositif de refroidissement d'huile du type précité et des moyens de prélèvement d'air dans une zone située en aval de la soufflante et en amont du compresseur haute-pression, aptes à alimenter la canalisation en air froid issu de ladite zone.

Le compresseur basse-pression peut être couplé en rotation à la turbine basse-pression par l'intermédiaire d'un premier arbre, le compresseur haute-pression étant couplé en rotation à la turbine haute-pression par l'intermédiaire d'un second arbre coaxial au premier arbre et monté à l'intérieur de celui-ci, l'extrémité amont du premier arbre étant équipée d'un palier situé dans une enceinte, l'air issu de la canalisation débouchant dans ladite enceinte.

L'évacuation de l'air, en aval des moyens d'extraction, dans une telle enceinte permet de bénéficier d'une deuxième passe d'extraction d'huile en facilitant le regroupement des gouttelettes (augmentation de leur taille et ruissellement) par effet de coalescence.

L'invention concerne enfin un procédé de refroidissement d'huile dans une turbomachine, à l'aide d'un dispositif du type précité, caractérisé en ce qu'il comporte les étapes consistant à :
- faire circuler un flux d'air froid à l'intérieur de la canalisation,
- injecter de l'huile dans ladite canalisation à l'aide des moyens d'injection, de façon à mélanger l'huile et l'air et favoriser ainsi le refroidissement de l'huile par l'air,
- séparer l'huile de l'air de façon à extraire l'huile contenue dans ledit mélange, à l'aide des moyens d'extraction.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'une turbomachine de l'art antérieur,
- la figure 2 est une vue schématique d'un dispositif de refroidissement d'huile d'une turbomachine, conformément à l'invention.

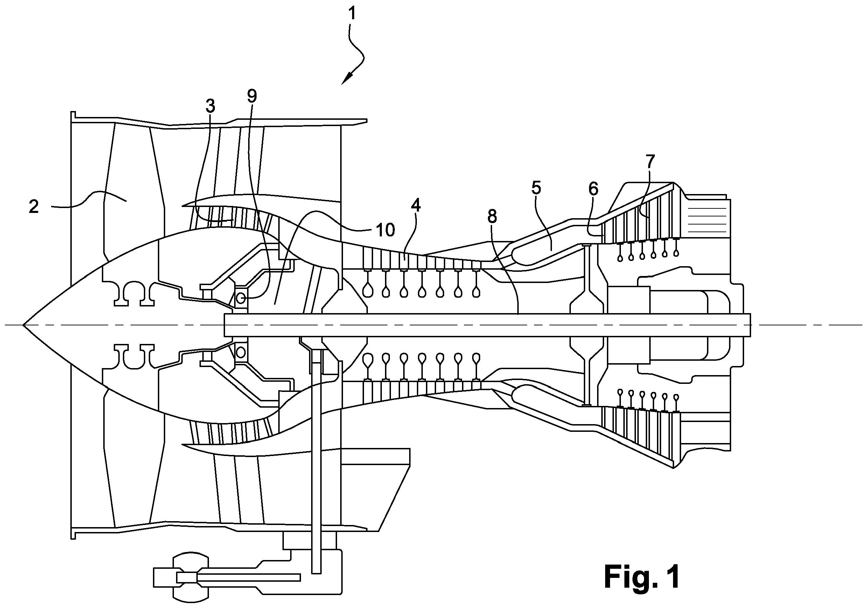

La figure 1 représente un turboréacteur d'avion 1 de l'art antérieur, comportant, d'amont en aval dans le sens d'écoulement des gaz, une soufflante 2, un compresseur basse pression 3, un compresseur haute pression 4, une chambre de combustion 5, une turbine haute pression 6, une turbine basse pression 7, et une tuyère d'échappement des gaz (non représentée).

Le compresseur basse-pression 3 est couplé en rotation à la turbine basse-pression 7 par l'intermédiaire d'un premier arbre 8, le compresseur haute-pression 4 étant couplé en rotation à la turbine haute-pression 6 par l'intermédiaire d'un second arbre (non représenté) coaxial au premier arbre 8 et monté à l'intérieur de celui-ci. L'extrémité amont du premier arbre 8 est équipée d'un palier du type roulement à billes 9, situé dans une enceinte ventilée 10.

Comme indiqué précédemment, les différents organes et équipements du turboréacteur 1 doivent être lubrifiés ou refroidis à l'aide d'un circuit d'huile, la chaleur générée et transportée par l'huile étant évacuée à l'aide d'un dispositif de refroidissement d'huile.

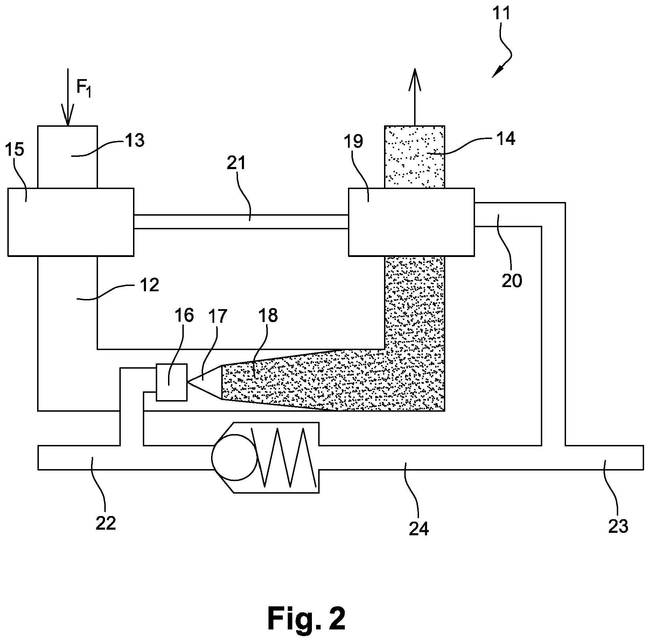

La figure 2 illustre un dispositif de refroidissement d'huile 11 selon une forme de réalisation de l'invention, comportant une canalisation 12 de circulation d'un flux d'air froid F₁. L'extrémité amont 13 de la canalisation 12 est alimentée en air froid par des moyens de prélèvement d'air dans une zone située en aval de la soufflante 2 et en amont du compresseur haute-pression 4. L'extrémité aval 14 de la canalisation 12 débouche dans l'enceinte ventilée 10.

La canalisation 12 comporte, d'amont en aval, dans le sens de circulation du flux d'air froid F₁, une turbine 15, une buse 16 d'injection d'huile apte à pulvériser des gouttelettes d'huile 17 dans la canalisation et former ainsi un mélange air-huile 18, et un déshuileur rotatif 19 apte à séparer l'huile 20 dudit mélange 18. Le déshuileur 19 est entraîné en rotation par un arbre 21 entrainé par la turbine 15. Le déshuileur 19 peut comporter un corps en mousse métallique afin d'améliorer encore son efficacité.

Le dispositif 11 selon l'invention comporte en outre une conduite d'arrivée d'huile 22 alimentant la buse 16 et une conduite d'extraction d'huile 23 reliée au déshuileur rotatif 19, lesdites conduites d'arrivée et d'extraction d'huile 22, 23 étant reliées par une conduite de dérivation 24 comportant un clapet anti-retour 25 ou une vanne apte à s'ouvrir en cas de surpression au niveau de la conduite d'arrivée d'huile 22.

On notera qu'un tel dispositif peut être contenu dans un seul équipement sans liaison cinématique avec le reste de la turbomachine 1, ce qui facilite son montage.

Le fonctionnement d'un tel dispositif 11 va maintenant être décrit en détail.

De l'air est prélevé dans la zone située en aval de la soufflante 2 et en amont du compresseur haute-pression 4. Cet air est ensuite détendu par passage au travers de la turbine 15. Cette dernière entraîne l'arbre 21 ainsi que le déshuileur rotatif 19. La buse 16 pulvérise de fines gouttelettes d'huile 17, dont les dimensions sont par exemple comprises entre 1 et 5 µm, dans l'air, de manière à former un mélange air-huile 18 relativement homogène. Les gouttelettes d'huile sont alors refroidies par l'air, jusqu'à atteindre une température de sortie Ths théoriquement égale à

(Th)s = [(Th)e - (Ta)e)]/[(Da.(cp)a+ Dh.cph], avec :
(Th)s : Température de sortie d'huile
(Th)e : Température d'entrée d'huile
(Ta)e Température d'entrée d'air
Da : Débit masse d'air
(cp)a : Chaleur spécifique de l'air
Dh : Débit masse d'huile
(cp)h : Chaleur spécifique de l'huile.

Une majeure partie de l'huile 20 est ensuite extraite vers la conduite d'extraction 23, à l'aide du déshuileur rotatif 19. Une faible partie de l'huile est toutefois emportée avec le flux d'air vers l'enceinte 10 où l'huile peut bénéficier d'une deuxième passe d'extraction en facilitant le regroupement des gouttelettes (augmentation de leur taille et ruissellement) par effet de coalescence.

Un tel dispositif 11 permet donc de refroidir efficacement l'huile utilisée pour la lubrification des différents organes de la turbomachine 1 et présente également une masse et un encombrement relativement faibles, compte tenu de ses performances.

## Revendications

1. Dispositif (11) de refroidissement d'huile pour une turbomachine (1), telle qu'un turboréacteur ou un turbopropulseur d'avion, comportant une canalisation (12) de circulation d'un flux d'air froid (F₁), des moyens d'injection d'huile (16) à l'intérieur de la canalisation, et **caractérisé en ce qu'**il comporte des moyens d'extraction (19) de l'huile mélangée au flux d'air froid (F₁), situés dans la canalisation (12), en aval des moyens d'injection (16).

2. Dispositif (11) de refroidissement d'huile selon la revendication 1, **caractérisé en ce que** les moyens d'injection d'huile comportent une buse d'injection (16) apte à pulvériser l'huile de manière à former des gouttelettes d'huile (17) de dimensions comprises entre 1 et 5 µm.

3. Dispositif (11) de refroidissement d'huile selon l'une des revendications 1 ou 2, **caractérisé en ce qu'**il comporte une conduite d'arrivée d'huile (22) reliée aux moyens d'injection d'huile (16) et une conduite d'extraction d'huile (23) reliée aux moyens d'extraction d'huile (19), lesdites conduites d'arrivée et d'extraction d'huile (22, 23) étant reliées par une conduite de dérivation (24) comportant un clapet (25) ou une vanne apte à s'ouvrir en cas de surpression au niveau de la conduite d'arrivée d'huile (22).

4. Dispositif (11) de refroidissement d'huile selon l'une des revendications 1 à 3, **caractérisé en ce que** les moyens d'extraction d'huile comportent un déshuileur rotatif (19).

5. Dispositif (11) de refroidissement d'huile selon la revendication 4, **caractérisé en ce que** la canalisation (12) est équipée d'une turbine (15) en amont des moyens d'injection d'huile (16), la turbine (15) comportant un arbre (21), destiné à être entraîné en rotation par passage du flux d'air (F₁) au travers de la turbine (15), et couplé en rotation au déshuileur rotatif (19).

6. Dispositif (11) de refroidissement d'huile selon l'une des revendications 1 à 5, **caractérisé en ce que** les moyens d'extraction d'huile (19) comportent un corps en mousse métallique.

7. Turbomachine (1) telle qu'un turboréacteur ou un turbopropulseur d'avion, comportant, d'amont en aval dans le sens d'écoulement des gaz, une soufflante (2), un compresseur basse pression (3), un compresseur haute pression (4), une chambre de combustion (5), une turbine haute pression (6), une turbine basse pression (7), et une tuyère d'échappement des gaz, **caractérisée en ce qu'**elle comporte un dispositif (11) de refroidissement d'huile selon l'une des revendications 1 à 6 et des moyens de prélèvement d'air dans une zone située en aval de la soufflante (2) et en amont du compresseur haute-pression (4), aptes à alimenter la canalisation (12) en air froid issu de ladite zone.

8. Turbomachine (1) selon la revendication 7, **caractérisée en ce que** le compresseur basse-pression (3) est couplé en rotation à la turbine basse-pression (7) par l'intermédiaire d'un premier arbre (8), le compresseur haute-pression (4) étant couplé en rotation à la turbine haute-pression (6) par l'intermédiaire d'un second arbre coaxial au premier arbre (8) et monté à l'intérieur de celui-ci, l'extrémité amont du premier arbre (8) étant équipée d'un palier (9) situé dans une enceinte (10), l'air issu de la canalisation (12) débouchant dans ladite enceinte (10).

9. Procédé de refroidissement d'huile dans une turbomachine, à l'aide d'un dispositif (11) selon l'une des revendications 1 à 6, **caractérisé en ce qu'**il comporte les étapes consistant à :
- faire circuler un flux d'air froid (F₁) à l'intérieur de la canalisation (12),
- injecter de l'huile dans ladite canalisation (12) à l'aide des moyens d'injection (16), de façon à mélanger l'huile et l'air et favoriser ainsi le refroidissement de l'huile par l'air,
- séparer l'huile de l'air de façon à extraire l'huile contenue dans ledit mélange (18), à l'aide des moyens d'extraction (19).

## Patentansprüche

1. Ölkühlvorrichtung (11) für ein Turbotriebwerk (1), wie etwa ein Turbostrahltriebwerk oder ein Turboprop-Triebwerk für Flugzeuge, enthaltend eine Zirkulationsrohrleitung (12) zur Zirkulation eines Kaltluftstroms (F₁), Öleinspritzmittel (16) zum Einspritzen von Öl in das Innere der Rohrleitung, **dadurch gekennzeichnet, dass** sie Abziehensmittel (19) zum Abziehen von mit dem Kaltluftstrom (F₁) vermischtem Öl enthält, die sich in der Rohrleitung (12) stromabwärts der Einspritzmittel (16) befinden.

2. Ölkühlvorrichtung (11) nach Anspruch 1, **dadurch gekennzeichnet, dass** die Öleinspritzmittel eine Einspritzdüse (16) enthalten, die dazu geeignet ist, das Öl so zu zerstäuben, dass Öltröpfchen (17) mit Abmessungen zwischen 1 und 5 µm entstehen.

3. Ölkühlvorrichtung (11) nach einem der Ansprüche 1 oder 2, **dadurch gekennzeichnet, dass** sie eine Ölzuführleitung (22) enthält, die mit den Öleinspritzmitteln (16) verbunden ist, sowie eine Ölabführleitung (23), die mit den Ölabziehensmitteln (19) verbunden ist, wobei die Ölzuführ- und Abführleitungen (22, 23) über eine Bypassleitung (24) verbunden sind, die eine Klappe (25) bzw. ein Ventil enthält, die bzw. das dazu geeignet ist, sich im Falle eines Überdrucks im Bereich der Ölzuführleitung (22) zu öffnen.

4. Ölkühlvorrichtung (11) nach einem der Ansprüche 1 bis 3, **dadurch gekennzeichnet, dass** die Ölabziehensmittel einen rotierenden Ölabscheider (19) enthalten.

5. Ölkühlvorrichtung (11) nach Anspruch 4, **dadurch gekennzeichnet, dass** die Rohrleitung (12) stromaufwärts der Öleinspritzmittel (16) mit einer Turbine (15) ausgestattet ist, wobei die Turbine (15) eine Welle (21) enthält, die dazu bestimmt ist, durch das Durchströmen des Luftstroms (F₁) durch die Turbine (15) drehend angetrieben zu werden und mit dem rotierenden Ölabscheider (19) drehgekoppelt ist.

6. Ölkühlvorrichtung (11) nach einem der Ansprüche 1 bis 5, **dadurch gekennzeichnet, dass** die Ölabziehensmittel (19) einen Körper aus Metallschaum enthalten.

7. Turbotriebwerk (1), wie etwa Turbostrahltriebwerk oder Turboprop-Triebwerk für Flugzeuge, enthaltend von stromaufwärts nach stromabwärts in Gasströmungsrichtung ein Gebläse (2), einen Niederdruckverdichter (3), einen Hochdruckverdichter (4), eine Brennkammer (5), eine Hochdruckturbine (6), eine Niederdruckturbine (7) und eine Gasausströmdüse, **dadurch gekennzeichnet, dass** es eine Ölkühlvorrichtung (11) nach einem der Ansprüche 1 bis 6 und in einem stromabwärts des Gebläses (2) und stromaufwärts des Hochdruckverdichters (4) liegenden Bereich Luftentnahmemittel enthält, die dazu geeignet sind, die Rohrleitung (12) mit von dem Bereich stammender Kaltluft zu versorgen.

8. Turbotriebwerk (1) nach Anspruch 7, **dadurch gekennzeichnet, dass** der Niederdruckverdichter (3) mit der Niederdruckturbine (7) über eine erste Welle (8) drehgekoppelt ist, wobei der Hochdruckverdichter (4) mit der Hochdruckturbine (6) über eine zweite Welle drehgekoppelt ist, die koaxial zur ersten Welle (8) verläuft und innerhalb derselben gelagert ist, wobei das stromaufwärtige Ende der ersten Welle (8) mit einem Lager (9) versehen ist, das in einem Raum (10) liegt, wobei die von der Rohrleitung (12) stammende Luft in den Raum (10) mündet.

9. Verfahren zum Kühlen von Öl in einem Turbotriebwerk mittels einer Vorrichtung (11) nach einem der Ansprüche 1 bis 6, **dadurch gekennzeichnet, dass** es die nachstehenden Schritte umfasst:
- Zirkulieren eines Kaltluftstroms (F₁) innerhalb der Rohrleitung (12),
- Einspritzen von Öl in die Rohrleitung (12) mit Hilfe der Einspritzmittel (16) derart, dass das Öl und die Luft vermischt werden und somit das Kühlen von Öl durch die Luft begünstigt wird,
- Trennen von Öl und Luft derart, dass das in dem Gemisch (18) enthaltene Öl mit Hilfe der Abziehensmittel (19) abgezogen wird.

## Claims

1. A device (11) for cooling oil for a turbine engine (1), such as an aircraft turbojet or turboprop engine, **characterised in that** it comprises a duct (12) for circulation of a cold air flow (F₁), means (16) for injecting oil inside the duct, and **characterized in that** it comprises means (19) for extracting oil mixed with the cold air flow (F₁), situated in the duct (12), downstream of the injection means (16).

2. An oil cooling device (11) according to claim 1, **characterised in that** the oil injection means comprise an injection nozzle (16) able to atomise the oil so as to form droplets of oil (17) with dimensions between 1 and 5 µm.

3. An oil cooling device (11) according to one of claims 1 or 2, **characterised in that** it comprises an oil inlet conduit (22) connected to the oil injection means (16) and an oil extraction conduit (23) connected to the oil extraction means (19), said oil inlet and extraction conduits (22, 23) being connected by a bypass conduit (24) comprising a flap (25) or a valve able to open in case of overpressure in the oil inlet conduit (22).

4. An oil cooling device (11) according to one of claims 1 to 3, **characterised in that** the oil extraction means comprise a rotary oil separator (19).

5. An oil cooling device (11) according to claim 4, **characterised in that** the duct (12) is equipped with a turbine (15) upstream of the oil injection means (16), the turbine (15) comprising a shaft (21) intended to be rotated by passage of the air flow (F₁) through the turbine (15) and rotationally coupled to the rotary oil separator (19).

6. An oil cooling device (11) according to one of claims 1 to 5, **characterised in that** the oil extraction means (19) comprise a body made from metal foam.

7. A turbine engine (1) such as an aircraft turbojet or turboprop engine, comprising, from upstream to downstream in the direction of flow of the gases, a fan (2), a low-pressure compressor (3), a high-pressure compressor (4), a combustion chamber (5), a high-pressure turbine (6), a low-pressure turbine (7) and a gas exhaust pipe, **characterised in that** it comprises an oil cooling device (11) according to one of claims 1 to 6 and means for bleeding of air in a zone situated downstream of the fan (2) and upstream of the high-pressure compressor (4), able to supply the duct (12) with cold air coming from said zone.

8. A turbine engine (1) according to claim 7, **characterised in that** the low-pressure compressor (3) is rotationally coupled to the low-pressure turbine (7) by means of a first shaft (8), the high-pressure compressor (4) being rotationally coupled to the high-pressure turbine (6) by means of a second shaft coaxial with the first shaft (8) and mounted inside the latter, the upstream end of the first shaft (8) being equipped with a bearing (9) located in an enclosure (10), the air coming from the duct (12) opening in said enclosure (10).

9. A method for cooling oil in a turbine engine, by means of a device (11) according to one of claims 1 to 6, **characterised in that** it comprises the steps consisting of:
- circulating a cold air flow (F₁) inside the duct (12),
- injecting oil into said duct (12) using injection means (16), so as to mix the oil and air and thus promote the cooling of the oil by the air,
- separating the oil from the air so as to extract the oil contained in said mixture (18), using the extraction means (19).
